# FASCICULE DE BREVET EUROPEEN

(11) **EP 1 897 412 B1**
(45) Date de publication et mention de la délivrance du brevet: **25.12.2013**
(21) Numéro de dépôt: 06778991.7
(22) Date de dépôt: 29.06.2006
(51) Int. Cl.: H05B 3/86

(54) **VITRAGE CHAUFFANT FEUILLETE AYANT UN CONFORT DE VISION AMELIORE**
MULTISCHICHTEN BEHEIZBARE SCHEIBEN VERSEHEN MIT VERBESSERTER FREUNDLICHER SICHTBARKEIT
HEATED LAMINATED GLASS PANE HAVING AN IMPROVED VISION COMFORT

(30) Priorité: 30.06.2005 FR 0551846
(43) Date de publication de la demande: 12.03.2008
(73) Titulaire: SAINT-GOBAIN GLASS FRANCE, 92400 Courbevoie (FR)
(72) Inventeur: CHAUSSADE, Pierre, F-45100 Orleans (FR); GOFFIN, Guillaume, F-45100 Orleans (FR); LEGOIS, Vincent, 45110 Germigny Des Pres (FR)
(74) Mandataire: Cardin, Elise
(86) Numéro de dépôt international: PCT/FR2006/050647
(87) Numéro de publication internationale: WO 2007/003849

(56) Documents cités:
- EP-A- 0 395 301
- EP-A- 0 893 938
- GB-A- 1 206 194
- US-B1- 6 559 419

## Description

La présente invention concerne les vitrages chauffants feuilletés comprenant au moins deux plis superposés de substrat transparent, mécaniquement résistant, avec interposition entre deux plis voisins d'une couche intercalaire en matière plastique transparente, ledit vitrage comportant en outre, en surface ou dans son épaisseur, au moins une couche mince conductrice et transparente qui s'étend sur une partie au moins du vitrage, ladite couche ou lesdites couches étant chauffante en vue du dégivrage et/ou du désembuage par effet Joule, avec une zone chauffante entre deux amenées de courant en cas d'alimentation en courant monophasé ou avec trois zones chauffantes entre des amenées de courant propres en cas d'alimentation en courant triphasé, lesdites amenées de courant étant disposées en limite de vitrage et étant reliées à une source de courant extérieure au vitrage, au moins une couche mince comportant des lignes de séparation de flux formées par gravure pour guider l'intensité de courant d'une bande à l'autre.

D'un manière générale, le dégivrage est à forte puissance électrique, de l'ordre de 70 Watts/dm², alors que le désembuage est à puissance inférieure entre 15 et 30 Watts/dm².

A titre d'exemple de ce vitrage feuilleté, on peut mentionner les glaces de véhicules, en particulier les glaces de cockpit d'avion, dont un exemple typique (non limitatif) de structure et de fabrication peut être décrit de la façon suivante :

### Structure:

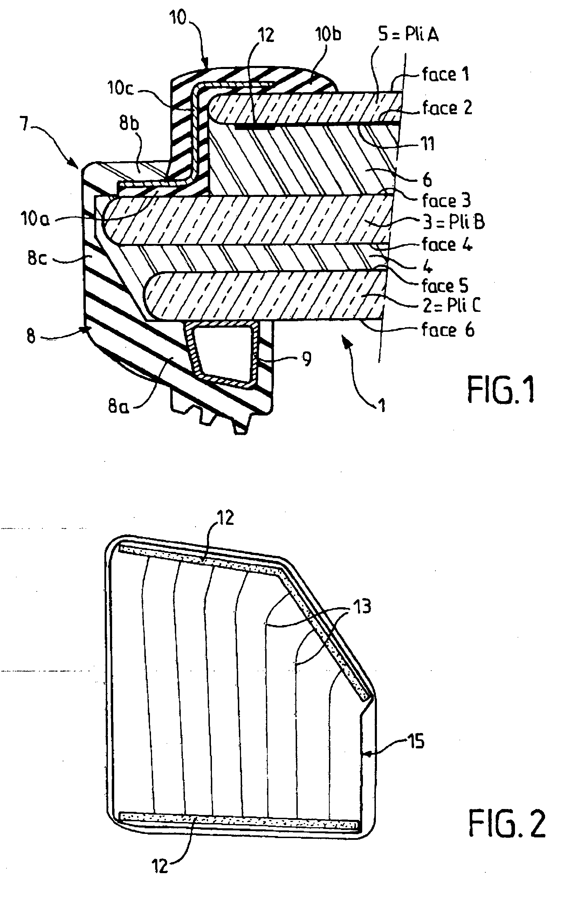

Les glaces en verre de cockpit d'avion sont généralement constituées de trois plis de verre A, B, C en partant de l'extérieur de l'avion, assemblés par des couches intercalaires thermoplastiques, notamment en polyvinylbutyral (PVB) ou en polyuréthanne (TPU). Généralement, la face interne du pli A (face 2 si l'on se réfère à la Figure 1 qui sera décrite ci-après) ou la face externe du pli B (face 3) est revêtue de la couche mince chauffante précitée, le plus souvent à base d'un oxyde métallique tel que SnO₂ ou ITO (oxyde d'indium dopé à l'étain). La couche en face 2 est utilisée pour le dégivrage, et la couche en face 3, pour le désembuage du vitrage. On peut souligner que le désembuage peut également être sur le pli B en face 4, ou sur le pli C, face 5. Typiquement l'épaisseur du pli A est de 3 mm, et celle du pli B est de 5 ou 6 mm dans le cas d'une glace latérale de cockpit d'avion.

### Formation des bandes d'amenée de courant :

Une couche mince transparente et conductrice est chauffante par effet Joule entre des bandes d'amenée de courant (électrodes ou collecteurs ou bus-bars) par exemple à base d'émaux conducteurs chargés à l'argent (pâte d'argent), ces bandes ayant été déposées sur la face interne du pli A ou du pli B par sérigraphie. Elles ont généralement une largeur de 5 à 10 mm et sont, dans le cas d'une alimentation en courant monophasé, déposées sur toute la longueur du pli A ou du pli B (ou la largeur) généralement à quelques millimètres du bord de la glace pour ne pas gêner la vision. Les amenées délimitent entre elles une zone chauffante la plus grande possible par rapport à la surface totale des plis de verre en vue d'une efficacité maximale du dégivrage /désembuage. Comme indiqué, en alimentation monophasée, il n'y a que deux amenées. En alimentation triphasée, le réseau comporte trois zones avec des amenées propres pouvant être reliées suivant un montage en étoile ou en triangle.

Lorsque la glace est plane, comme cela est très souvent le cas pour les pare-brise, le verre A, après découpe et façonnage, est semi-trempé dans un four de trempe vertical, la trempe permettant aussi de cuire les émaux à l'argent.

Lorsque la glace est bombée, le verre B, après façonnage en joint rond douci et bombage, est renforcé chimiquement de manière à augmenter son module à la rupture. A titre d'exemple, on utilise un pli fait d'un verre d'une composition qui autorise un renforcement chimique à forte profondeur d'échange, supérieure à 250 microns (exemple, verre Solidion®). Les amenées de courant sont sérigraphiées sur le verre puis cuites à haute température après l'étape de renforcement chimique.

### Formation d'une couche mince chauffante :

L'étape suivante consiste à déposer la couche mince transparente et conductrice sur la face du pli de verre muni de ses amenées de courant.

Dans le cas d'une couche en ITO notamment, le dépôt se fait avantageusement par une technique PVD (Physical Vapor Deposition), qui consiste à pulvériser du matériau source grâce aux ions extraits d'un plasma. Si le matériau source appelé cible est polarisé négativement pour amorcer le plasma, la technique est une pulvérisation cathodique. Si l'on joint au champ électrique un champ magnétique perpendiculaire, afin d'augmenter la densité ionique dans une zone proche de la cathode, on parle de pulvérisation magnétron. On peut citer une pulvérisation cathodique avec une cible ITO céramique sur un « magnétron planar », qui dépose de l'ITO sur toute la surface du verre. Les paramètres de puissance magnétron et de vitesse de passage du verre permettent de fixer une résistance par carré et donc une résistance électrique entre amenées, par rapport aux caractéristiques tension/courant d'alimentation du vitrage chauffant.

On peut également citer le procédé de dépôt en couches minces par pyrolyse, technique suivant laquelle on projette à l'aide d'un système de pulvérisation un mélange composé d'une partie organique et d'une partie minérale sur un verre chauffé entre 500 et 700°C, notamment entre 600 et 650°C, la partie organique brûlant et la partie minérale restant sur le verre sous forme de couche mince. Avec cette technique, on peut notamment déposer une couche à base de SnO₂.

On peut également déposer les couches minces par évaporation sous-vide par effet Joule.

Dans le cas le plus fréquent de vitrages non rectangulaires, les amenées suivent la géométrie du vitrage et ne sont alors plus parallèles. Le réseau chauffant doit, dans ce cas, présenter des zones de résistances locales différentes afin de compenser la variation de distances entre amenées. La Société déposante est dotée de moyens de calcul et de fabrication de réseaux intrinsèquement non homogènes afin de réaliser des réseaux de forme quelconque et de dissipation homogène, c'est-à-dire sans les zones froides qui se trouvent dans les angles aigus des vitrages. Ceci conduit notamment à réaliser des lignes courbes ou à inflexions pour la séparation de flux afin de guider le courant, ces lignes étant réalisées par gravure de la couche mince chauffante.

Dans le cas d'une alimentation triphasée, on réalise aussi, par gravure de la couche mince chauffante, une séparation du réseau chauffant en trois zones par gravure de lignes de séparation de phase.

### Assemblage/Autoclavage/Finition :

Pour terminer la fabrication de la glace, le pli A, muni de sa couche mince chauffante avec un système de connectique par tresse métallique collée aux amenées de courant, est assemblé avec les deux autres plis de verre B et C au moyen de couches intercalaires thermoplastiques, telles que PVB ou TPU. L'ensemble est cuit sous poche à vide, en autoclave à haute pression et haute température, pour donner un produit feuilleté complet. L'étanchéité des bords du feuilleté est assurée par une encapsulation périphérique au moyen de matériaux barrières de type polysulfure, ZED inox et joint silicone surmoulé, afin de permettre de disposer la glace dans la structure « avion ».

Lorsqu'une couche mince chauffante est prévue sur le pli B, une telle couche est appliquée avant l'assemblage des plis A, B, C.

Le problème qui se pose est que les lignes de séparation de flux, qui sont réalisées avec des largeurs de 0,5mm par les techniques courantes dans les couches minces chauffantes, sont visibles à travers le vitrage, ce qui diminue le confort de vision et l'esthétique du vitrage. Ces techniques courantes sont représentées par le document GB-A-1 206 194.

Pour résoudre ce prabléme, la Société déposante a découvert que les largeurs des lignes de flux pouvaient être diminuées jusqu'au point où elles ne sont plus visibles à l'oeil nu au sein du vitrage, sans nuire au bon guidage du flux, cette diminution des largeurs étant rendue possible par l'utilisation d'une technologie laser, avec l'avantage complémentaire de pouvoir augmenter le nombre de ces lignes de séparation de flux, dorénavant invisibles à l'oeil nu, permettant alors d'améliorer le désembuage et/ou le dégivrage.

La présente invention a donc pour objet un vitrage chauffant feuilleté du type de ceux définis dans le premier paragraphe de la présente description, caractérisé par le fait que la largeur desdites lignes de séparation de flux est choisie suffisamment faible pour que celles-ci soient invisibles à l'oeil nu dans le vitrage chauffant feuilleté.

Les lignes de séparation de flux ont notamment chacune une largeur de 0,1 à 0,2 mm.

Les lignes de séparation de flux sont formées notamment par gravure de la couche mince et conductrice sur une profondeur pouvant aller jusqu'à la couche sous-jacente. Lorsque la gravure ne s'étend pas en profondeur jusqu'au fond de la ligne, c'est-à-dire jusqu'au substrat (verre), il reste donc dans ce fond une faible épaisseur de couche, laquelle favorise une meilleure homogénéité du chauffage.

Les lignes de séparation de flux peuvent être des lignes continues ou des lignes discontinues, par exemple des lignes en pointillés, ce, pour un meileur compromis isolation électrique/continuité.

Avantageusement, la couche mince ou au moins une couche mince comportant des lignes de séparation de flux est une couche de désembuage.

Les lignes de séparation de flux sont avantageusement disposées suivant des lignes sensiblement parallèles qui se raccordent sensiblement orthogonalement à leurs deux bandes d'amenée respectives et qui présentent des courbures ou inflexions lorsque les deux bandes ou parties de bandes en regard forment un angle entre elles.

Dans le cas où l'alimentation en courant est une alimentation triphasée, les trois zones chauffantes sont délimitées par deux lignes de séparation de phase avantageusement de tracé sensiblement parallèle aux lignes de séparation de flux et formées par gravure allant jusqu'à la couche sous-jacente et ayant une largeur de 1 à 2 mm, les bandes d'amenée de courant étant alors agencées pour un montage en étoile ou en triangle.

La couche mince conductrice est avantageusement une couche d'oxyde d'étain ou d'oxyde d'indium dopé à l'étain ou d'oxyde d'étain dopé au fluor, chacune de ces couches ayant généralement une épaisseur de 50 à 500 nanomètres, ou une couche d'argent ou d'or ayant généralement une épaisseur de 50 à 200 nanomètres.

De façon généralement préférée, la couche mince conductrice est délimitée à sa périphérie par une ligne fermée sur elle-même, également formée par gravure, la dite ligne enfermant les bandes d'amenée de courant, et étant formées une profondeur allant jusqu'à la couche sous-jacente. La largeur de cette ligne périphérique est de 1 à 4 mm.

Le vitrage selon la présente invention peut notamment consister en une glace pour véhicule, en particulier en une glace latérale ou frontale pour cockpit d'avion, caractérisé par le fait que la structure feuilletée comprend au moins deux plis de verre structuraux (Plis B et C) destinés à être fixés dans une feuillure du véhicule, et qui sont liées entre elles par une première couche intercalaire en matière plastique transparente, au moins une troisième feuille (Pli A), notamment en verre, non fixée à la feuillure et qui est liée au pli de verre structural qui est tourné vers l'extérieur (Pli B), par l'intermédiaire d'une seconde couche intercalaire en matière plastique, au moins une couche mince conductrice étant disposée dans l'épaisseur du vitrage.

Un tel vitrage peut comporter au moins une couche mince de désembuage, les positions possibles de la ou de chaque couche de désembuage étant :
- sur le pli B, en face tournée vers l'extérieur du vitrage (face 3) ou en face tournée vers l'intérieur du vitrage (face 4);
- sur le pli C, en face tournée vers l'extérieur du vitrage (face 5).

Un tel vitrage peut également comporter une couche mince de dégivrage sur le pli A, en face tournée vers l'intérieur du vitrage (face 2).

La couche mince conductrice a été généralement appliquée par les moyens connus décrits plus haut, sur la couche de verre associée, laquelle a été avantageusement dotée des moyens d'amenée du courant.

Lesdites bandes d'amenée de courant peuvent être disposées entre les couches du vitrage qui comprennent entre elles la couche mince conductrice.

Le vitrage selon la présente invention peut également comporter au moins une couche mince fonctionnelle autre que la couche chauffante, par exemple une couche pour la protection solaire ou une couche électrochrome, plusieurs de ces couches minces fonctionnelles pouvant se présenter sous la forme d'un empilement de couches. Dans certains cas, par exemple celui d'une glace frontale de cockpit d'avion, il est possible d'avoir une couche d'ITO de dégivrage sur le pli A et une couche de désembuage sur le pli B.

La présente invention a également pour objet un procédé de fabrication d'un vitrage tel que défini ci-dessus, suivant lequel on réalise un assemblage des plis de substrat transparent au moyen de couches intercalaires en matière plastique transparente, au moins un de ces plis étant doté d'une couche mince conductrice transparente comportant des lignes de séparation de flux et des moyens d'amenée du courant, caractérisé par le fait que l'on réalise les lignes de séparation de flux par ablation au laser YAG, tel qu'un laser pulsé Nd-YAG, lambda 1064 nm, de puissance de pompage de 20 W, et d'une puissance de crête allant de 2,8 à 110 kW.

Avantageusement, on réalise simultanément aux lignes de séparation de flux, la ligne délimitant la périphérie de la couche conductrice et, dans le cas d'une alimentation triphasée, les lignes de séparation de phase.

Pour mieux illustrer l'objet de la présente invention, on va maintenant en décrire un mode de réalisation particulier avec référence au dessin annexé.

Sur ce dessin :
La Figure 1 est une vue partielle en coupe longitudinale d'un vitrage chauffant feuilleté pour cockpit d'avion conforme à l'invention ;
La Figure 2 est une vue schématique de face d'un vitrage chauffant feuilleté selon l'invention à alimentation monophasée et ;
Les Figures 3A et 3B est une vue schématique de face d'un vitrage chauffant feuilleté selon l'invention à alimentation triphasée, avec respectivement un montage en étoile ou en triangle.

Le vitrage chauffant 1 pour cockpit d'avion représenté sur la Figure 1 comprend, de façon connue en soi, deux feuilles de verre structurales 2, 3 qui sont reliés entre elles par l'intermédiaire d'une couche intercalaire 4 de matière thermoplastique transparentes telle que le PVB ou le TPU

La feuille de verre 3, qui est tournée vers l'extérieur du cockpit, a une surface plus grande que la feuille de verre 2. Elle est recouverte, sur sa face extérieure, d'une troisième feuille de verre 5, par l'intermédiaire d'une seconde couche intercalaire 6, également en matière plastique transparente, telle que le PVB ou le TPU.

La feuille 5 est en verre trempé ou renforcé chimiquement.

La feuille 5 et la couche intercalaire 6 ont une surface réduite par rapport à la feuille de verre structurale 3. Il se forme donc sur les feuilles 2 et 3 un rebord périphérique débordant 7 par lequel le vitrage peut être fixé dans une feuillure du cockpit, non représentée.

Un premier joint annulaire 8 en silicone ou fluorosilicone est fixé autour dudit rebord 7. Le joint 8 présente un profil ayant la forme générale d'un U comportant deux ailes 8a et 8b raccordées entre elles par un fond 8c. L'aile 8a vient s' appliquer contre la paroi interne de la feuille de verre 2, avec interposition d'une cale d'épaisseur 9 en aluminium.

Le fond 8c présente une épaisseur variable compte tenu du fait que la feuille 2 est de plus petite surface que la feuille 3.

Entre l'aile 8b et la face externe de la feuille de verre 3, est disposé un second joint annulaire 10 ayant la forme d'une bague venant s'appliquer contre le bord de feuilles 5 et 6, présentant, le long de l'une de ses bordures, un retour d'équerre 10a vers l'extérieur s'appliquant entre la feuille 3 et l'aile 8b du joint 8, et, le long de l'autre bordure, un retour d'équerre 10b vers l'intérieur venant s'appliquer contre la face externe de la feuille de verre externe 5.

Le joint 10 est renforcé par un feuillard métallique 10c de même profil que le joint 10 et noyé au sein de celui-ci.

Un film électroconducteur ou couche mince conductrice chauffante 11 est inséré entre la feuille de verre externe 5 et la couche intercalaire 6. Le film électroconducteur 11 est transparent et peut être réalisé en oxyde d'indium dopé à l'étain ou d'oxyde d'étain dopé au fluor. Il a une épaisseur de 50 nm à 500 nm. Le film électroconducteur 11 est relié à deux bandes d'amenée du courant ou collecteurs 12. Ces bandes 12 sont reliées à une source de courant extérieure au vitrage. Sur la Figure 1, les bandes 12 ont été représentées dans le même plan que le film électroconducteur 11 mais elles pourraient également être déportées sur d'autres couches du vitrage.

Le film électroconducteur 11 et les bandes d'amenée de courant 12 sont séparées de la feuille de verre structurale intérieure 2 par une épaisseur de matière relativement importante. Il en résulte que, si une perturbation de la régulation de la température du vitrage se produisait et qu'en conséquence des courts-circuits et des surchauffes localisées apparaissaient, ils pourraient occasionner des dégâts aux éléments du vitrage qui sont en contact avec le film conducteur 11, mais en aucun cas avec la feuille de verre intérieure 2. Le vitrage ainsi endommagé pourrait résister aux pressions différentielles existantes entre le milieu extérieur et le milieu intérieur.

Conformément à la présente invention, des lignes 13 de séparation de flux, sensiblement parallèles entre elles, destinées à guider l'intensité du courant, sont formées par gravure au laser dans la couche 11. Ces gravures sont effectuées sensiblement sur une largeur de l'ordre de 0,1 à 0,2 mm et sur une partie ou la totalité de l'épaisseur de la couche conductrice chauffante. Ces lignes peuvent être gravées de façon discontinue comme indiqué plus haut.

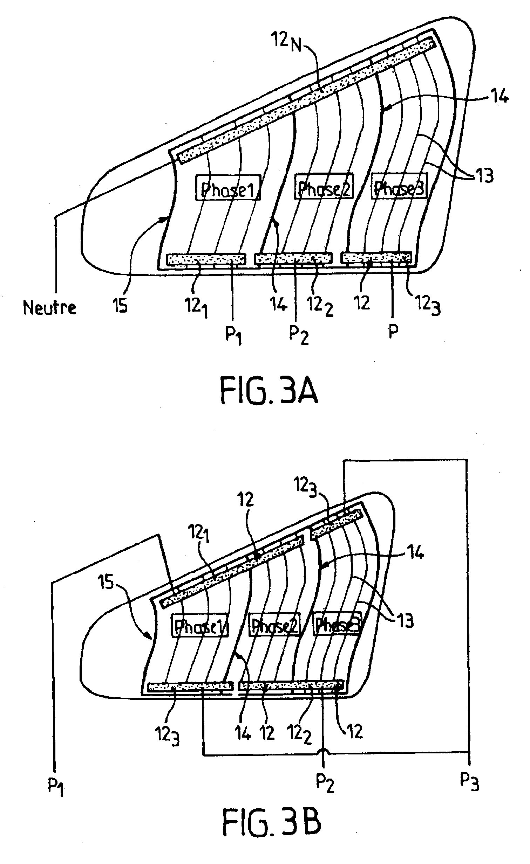

De telles lignes de séparation de flux, lesquelles sont en réalité invisibles, sont donc matérialisées par les courbes 13 représentées sur les Figures 2 et 3A, 3B. Ces dernières illustrent des vitrages chauffants feuilletés du type de ceux commercialisés pour les glaces latérales arrière des avions Airbus respectivement A300-340 et A380, la glace des Figures 3A, 3B étant représentée à plus petite échelle que celle de la Figure 2.

La glace de la Figure 2 à alimentation en courant monophasé a une forme pentagonale, présentant, en position -de montage, une bordure inférieure horizontale, deux bordures latérales verticales ayant deux bandes opposées 12 d'amenée du courant s'étendant le long du bord horizontal inférieur et du bord opposé qui a la forme d'une ligne brisée.

La glace des Figures 3A, 3B, à alimentation en courant triphasé, présente la forme générale d'un trapèze rectangle à bordures arrondies, les deux bases du trapèze étant disposées selon la hauteur de la glace en position de montage. Les deux collecteurs 12 sont disposés le long de la bordure des deux côtés opposés restants et sont agencés comme décrit ci-après.

Dans les deux cas, les lignes 13 de séparation de flux sont raccordées sensiblement orthogonalement à la bande 12 et l'on s'arrange pour qu'en dehors de leur zones de raccordement aux bandes 12, elles aient tendance à être parallèles aux côtés sans bande ; il en résultent qu'elles présentent des formes avec des courbures (Figure 2) ou des inflexions (Figures 3A, 3B), leur tracé est précis et calculé par l'homme du métier comme évoqué plus haut.

La glace des Figures 3A, 3B étant alimentée en courant triphasé, la couche 11 comporte également deux lignes 14 de séparation de phase remplaçant deux lignes de séparation de flux, formées de la même façon par gravure ou ablation laser sur toute l'épaisseur de la couche 11 mais sur une largeur de 0,5 à 2 mm, pour éviter toute possibilité de court-circuit entre deux phases, haute ddp, alors que -les deux lignes de séparation de flux dans une même phase où il n'y a pas de risque de court-circuit en raison de la basse ddp, ont une largeur de 0,1 à 0,2 mm.

Dans un montage en triphasé, les amenées peuvent être reliées suivant un montage en étoile (Figure 3A) ou en triangle (Figure 3B). Dans le premier cas, la bande 12 supérieure est reliée au neutre et la bande inférieure est discontinue, comportant trois bandes 12₁, 12₂, 12₃ reliées aux phases respectivement P₁, P₂ et P₃.

Dans le second cas, les deux bandes supérieure et inférieure sont discontinues, formant respectivement une bande 12₁ et un élément de bande 12₂, et l'autre élément de bande 12₃ et l'élément de bande 12₂, chaque bande 12₁, 12₂ et 12₃ étant reliée aux phases respectivement P₁, P₂ et P₃.

Dans tous les cas qui viennent d'être décrits, la couche 11 est délimitée à sa périphérie par une ligne 15 fermée sur elle-même, également formée par gravure jusqu'à la couche sous-jacente et sur une largeur de 1 à 4 mm, les parties latérales de la ligne 12 étant sensiblement parallèles aux lignes de séparation de flux 13 et les bords supérieur et inférieur étant parallèles aux bords des vitrages. La ligne 15 enferme les bandes 12.

La fabrication des vitrages qui vient d'être décrite est la même que celle décrite dans le préambule de la présente description, à ceci près que l'on forme des lignes de flux 13 de très faible dimension par un procédé d'ablation par LASER pulsé Nd-YAG de marque Trumpf, lambda 1064 nm, avec un système de scanner qui permet de graver n'importe quel motif dans une fenêtre 180*180mm. C'est ce scanner qui détermine la largeur de la gravure LASER, en décrivant un motif (un cercle de diamètre 0,5mm, 1, 2 ou 4mm...). Ce motif est ensuite guidé sur les vitrages suivant une trajectoire précise, par un bras-robot (marque KUKA). Les programmes pièces (trajectoires) sont stockées dans le robot, suivant un trièdre de référence. Il faut donc re-créer ce trièdre avant traitement LASER d'une glace: les amenées de courant sont un bon repère sur le vitrage / zone chauffante. La puissance moyenne du LASER pour ablation ITO est 3,8 W, la puissance crête environ 18kW.

## Revendications

1. Vitrage chauffant feuilleté comprenant au moins deux plis superposés (A, B, C) de substrat transparent, mécaniquement résistant, avec interposition entre deux plis voisins d'une couche intercalaire (4 ; 6) en matière plastique transparente, ledit vitrage comportant en outre, dans son épaisseur ou en surface au moins une couche mince conductrice et transparente (11) qui s'étend sur une partie au moins du vitrage, ladite couche ou lesdites couches (11) étant chauffantes en vue du dégivrage et/ou du désembuage par effet Joule, avec une zone chauffante entre deux amenées de courant (12) en cas d'alimentation en courant monophasé ou avec trois zones chauffantes entre des amenées de courant propres en cas d'alimentation en courant triphasé, lesdites amenées de courant étant disposées en limite de vitrage et étant reliées à une source de courant extérieure au vitrage, au moins une couche mince (11) comportant des lignes de séparation de flux (13) formées par gravure pour guider l'intensité de courant d'une bande à l'autre, **caractérisé par le fait que** la largeur desdites lignes de séparation de flux (13) est comprise entre 0,1 et 0,2 mm.

2. Vitrage chauffant selon la revendication 1, **caractérisé par le fait que** les lignes de séparation de flux (13) sont formées par gravure de la couche mince et conductrice (11) sur une profondeur pouvant aller jusqu'à la couche sous-jacente.

3. Vitrage chauffant selon l'une des revendications 1 et 2, **caractérisé par le fait que** les lignes de séparation de flux (13) sont des lignes continues ou des lignes discontinues, par exemple des lignes en pointillés.

4. Vitrage chauffant selon l'une des revendications 1 à 3, **caractérisé par le fait que** la couche mince ou au moins une couche mince (11) comportant des lignes de séparation de flux (13) est une couche de désembuage.

5. Vitrage chauffant selon l'une des revendications 1 a 4, **caractérisé par le fait que** les lignes de séparation de flux (13) sont disposées suivant des lignes sensiblement parallèles qui se raccordent sensiblement orthogonalement à leurs deux bandes d'amenée respectives (12) et qui présentent des courbures ou inflexions lorsque les deux bandes ou parties de bandes (12) en regard forment un angle entre elles.

6. Vitrage chauffant selon l'une des revendications 1 à 5, dans lequel l'alimentation en courant est une alimentation triphasée, **caractérisé par le fait que** les trois zones chauffantes sont délimitées par deux lignes de séparation de phase (14) de tracé sensiblement parallèle aux lignes de séparation de flux (13) et formées par gravure allant jusqu'à la couche sous-jacente et ayant une largeur de 1 à 2 mm, les bandes d'amenée de courant (12 ; 12₁, 12₂, 12₃) étant agencées pour un montage en étoile ou en triangle.

7. vitrage selon l'une des revendications 1 à 4, **caractérisé par le fait que** la couche mince conductrice (11) est une couche d'oxyde d'étain ou une couche d'oxyde d'indium dopé à l'étain ou une couche d'oxyde d'étain dopé au fluor, chacune de ces couches ayant généralement une épaisseur de 50 à 500 nanomètres, ou une couche d'argent ou d'or ayant généralement une épaisseur de 50 à 200 nanomètres.

8. vitrage selon l'une des revendications 1 à 7, **caractérisé par le fait que** la couche mince conductrice (11) est délimitée à sa périphérie par une ligne (15) fermée sur elle-même, également formée par gravure, ladite ligne (15) enfermant les bandes d'amenée de courant (12), et étant formées une profondeur allant jusqu'à la couche sous-jacente.

9. Vitrage selon l'une des revendications 1 à 7, consistant en une glace pour véhicule , en particulier en une glace latérale ou frontale pour cockpit d'avion, **caractérisé par le fait que** la structure feuilletée comprend au moins deux plis de verre structuraux (Plis B et C) destinés à être fixés dans une feuillure du véhicule, et qui sont liées entre elles par une première couche intercalaire (4) en matière plastique transparente, au moins une troisième feuille (Pli A), notamment en verre, non fixée à la feuillure et qui est liée au pli de verre structural qui est tourné vers l'extérieur (Pli B), par l'intermédiaire d'une seconde couche intercalaire (6) en matière plastique, au moins une couche mince conductrice (11) étant disposée dans l'épaisseur du vitrage.

10. vitrage selon la revendication 9, **caractérisé par le fait qu'**il comporte au moins une couche mince de désembuage, les positions possibles de la ou de chaque couche de désembuage étant :
- sur le pli B, en face tournée vers l'extérieur du vitrage (face 3) ou en face tournée vers l'intérieur du vitrage (face 4) ;
- sur le pli C, en face tournée vers l'extérieur du vitrage (face 5).

11. Vitrage selon l'une des revendications 9 et 10, **caractérisé par le fait qu'**il comporte une couche mince de dégivrage sur le pli A, en face tournée vers l'intérieur du vitrage (face 2)

12. Vitrage selon l'une des revendications 1 à 11, **caractérisé par le fait que** les dites bandes d'amenée de courant à une couche mince conductrice sont disposées entre les couches du vitrage qui comprennent entre elles la couche mince conductrice.

13. Vitrage selon l'une des revendications 1 à 12, **caractérisé par le fait qu'**il comporte au moins une couche mince fonctionnelle autre que la couche chauffante, par exemple une couche pour la protection solaire ou une coouche électrochrome, plusieurs de ces couches minces fonctionnelles pouvant se présenter sous la forme d'un empilement de couches.

14. Procédé de fabrication d'un vitrage tel que défini à l'une des revendications 1 à 13, suivant lequel on réalise un assemblage des plis de substrat transparent au moyen de couches intercalaires en matière plastique transparente, au moins un de ces plis étant doté d'une couche mince conductrice transparente comportant des lignes de séparation de flux et des moyens d'amenée du courant, **caractérisé par le fait que** l'on a réalisé les lignes de séparation de flux par ablation au laser YAG, tel qu'un laser pulsé Nd-YAG, lambda 1064 nm, de puissance de pompage 20W, et d'une puissance de crête allant de 2,8 à 110 kW.

15. Procédé selon la revendication 14, **caractérisé par le fait que** l'on réalise simultanément aux lignes de séparation de flux, la ligne délimitant la

## Patentansprüche

1. Beheizbare Verbundglasscheibe, umfassend wenigstens zwei übereinander angeordnete Lagen (A, B, C) eines transparenten, mechanisch festen Substrates mit Einfügung einer Zwischenschicht (4; 6) aus transparentem Kunststoffmaterial zwischen zwei benachbarten Lagen, wobei die Glasscheibe in ihrer Dicke oder auf der Oberfläche ferner wenigstens eine leitfähige und transparente, dünne Schicht (11) umfasst, die sich über wenigstens einen Teil der Glasscheibe erstreckt, wobei die Schicht oder die Schichten (11) zwecks Enteisung und/oder Beschlagentfernung mittels Joule-Effekt beheizbar sind, mit einer beheizbaren Zone zwischen zwei Stromzuführungen (12) im Fall einer Versorgung mit Einphasenstrom oder mit drei beheizbaren Zonen zwischen eigenen Stromzuführungen im Fall einer Versorgung mit Drehstrom, wobei die Stromzuführungen am Glasscheibenrand angeordnet und mit einer außerhalb der Glasscheibe befindlichen Stromquelle verbunden sind, wobei wenigstens eine dünne Schicht (11) Flusstrennungslinien (13) umfasst, die mittels Gravierung gebildet werden, um die Stromstärke von einem Band zum anderen zu leiten, **dadurch gekennzeichnet, dass** die Breite der Flusstrennungslinien (13) zwischen 0,1 und 0,2 mm beträgt.

2. Beheizbare Glasscheibe nach Anspruch 1, **dadurch gekennzeichnet, dass** die Flusstrennungslinien (13) mittels Gravierung der dünnen und leitfähigen Schicht (11) über eine Tiefe, die bis zur drunter liegenden Schicht reichen kann, gebildet werden.

3. Beheizbare Glasscheibe nach einem der Ansprüche 1 und 2, **dadurch gekennzeichnet, dass** die Flusstrennungslinien (13) durchgehende Linien oder unterbrochene Linien, zum Beispiel punktierte Linien, sind.

4. Beheizbare Glasscheibe nach einem der Ansprüche 1 bis 3, **dadurch gekennzeichnet, dass** die dünne Schicht oder wenigstens eine dünne Schicht (11), die Flusstrennungslinien (13) umfasst, eine Enteisungsschicht ist.

5. Beheizbare Glasscheibe nach einem der Ansprüche 1 bis 4, **dadurch gekennzeichnet, dass** die Flusstrennungslinien (13) gemäß im Wesentlichen parallelen Linien angeordnet sind, die im Wesentlichen senkrecht an ihre jeweiligen zwei Zuführungsbänder (12) angeschlossen sind, und die Krümmungen oder Biegungen aufweisen, wenn die zwei gegenüber liegenden Bänder oder Bänderteile (12) einen Winkel zwischen sich ausbilden.

6. Beheizbare Glasscheibe nach einem der Ansprüche 1 bis 5, wobei die Stromversorgung eine Drehstromversorgung ist, **dadurch gekennzeichnet, dass** die drei beheizbaren Zonen von zwei Phasentrennungslinien (14) begrenzt werden, deren Verlauf im Wesentlichen parallel zu den Flusstrennungslinien (13) verläuft und die mittels Gravierung gebildet werden, die bis in die darunter liegende Schicht reicht und eine Breite von 1 bis 2 mm aufweist, wobei die Stromzuführungsbänder (12; 12₁, 12₂, 12₃) für eine Befestigung in Stern- oder Dreiecksform angeordnet sind.

7. Glasscheibe nach einem der Ansprüche 1 bis 4, **dadurch gekennzeichnet, dass** die dünne, leitfähige Schicht (11) eine Zinnoxidschicht oder eine Zinn-dotierte Indiumoxidschicht oder eine Fluor-dotierte Zinnoxidschicht ist, wobei jede dieser Schichten im Allgemeinen -eine Dicke von 50 bis 500 Nanometer aufweist, oder eine Silber- oder Goldschicht, die im Allgemeinen eine Dicke von 50 bis 200 Nanometer aufweist.

8. Glasscheibe nach einem der Ansprüche 1 bis 7, **dadurch gekennzeichnet, dass** die dünne, leitfähige Schicht (11) an ihrem Rand durch eine in sich geschlossene Linie (15) begrenzt ist, die ebenfalls mittels Gravierung gebildet wird, wobei die Linie (15) die Stromzuführungsbänder (12) einschließt und eine Tiefe ausbildet, die bis zur darunter liegenden Schicht reicht.

9. Glasscheibe nach einem der Ansprüche 1 bis 7, bestehend in einer Fensterscheibe für ein Fahrzeug, insbesondere in einer Seiten- oder Frontfensterscheibe für ein Flugzeugcockpit, **dadurch gekennzeichnet, dass** die Verbundstruktur wenigstens zwei strukturelle Glaslagen (Lagen B und C) umfasst, die dazu bestimmt sind, in einem Falz des Fahrzeugs befestigt zu werden, und die durch eine erste Zwischenschicht (4) aus transparentem Kunststoffmaterial miteinander verbunden sind, und wenigstens eine dritte Folie (Lage A), insbesondere aus Glas, die nicht am Falz befestigt ist, und die mithilfe einer zweiten Zwischenschicht (6) aus Kunststoffmaterial mit der strukturellen Glaslage verbunden ist, die nach außen gewandt ist (Lage B), wobei wenigstens eine leitfähige, dünne Schicht (11) in der Dicke der Glasscheibe angeordnet ist.

10. Glasscheibe nach Anspruch 9, **dadurch gekennzeichnet, dass** sie wenigstens eine dünne Beschlagentfernungsschicht umfasst, wobei die möglichen Positionen der oder jeder Beschlagentfernungsschicht Folgende sind:
- auf Lage B, auf der der Außenseite der Glasscheibe zugewandten Fläche (Fläche 3) oder auf der der Innenseite der Glasscheibe zugewandten Fläche (Fläche 4);
- auf Lage C, auf der der Außenseite der Glasscheibe zugewandten Fläche (Fläche 5).

11. Glasscheibe nach einem der Ansprüche 9 und 10, **dadurch gekennzeichnet, dass** sie eine dünne Enteisungsschicht auf Lage A, auf der der Innenseite der Glasscheibe zugewandten Fläche (Fläche 2) umfasst.

12. Glasscheibe nach einem der Ansprüche 1 bis 11, **dadurch gekennzeichnet, dass** die Stromzuführungsbänder zu einer leitfähigen, dünnen Schicht zwischen jenen Schichten der Glasscheibe angeordnet sind, welche die leitfähige, dünne Schicht zwischen ihnen umfassen.

13. Glasscheibe nach einem der Ansprüche 1 bis 12, **dadurch gekennzeichnet, dass** sie neben der beheizbaren Schicht wenigstens eine funktionelle, dünne Schicht umfasst, zum Beispiel eine Schicht für Sonnenschutz oder eine elektrochrome Schicht, wobei sich mehrere dieser funktionellen, dünnen Schichten in Form einer Stapelung von Schichten darstellen können.

14. Verfahren zur Herstellung einer Glasscheibe nach einem der Ansprüche 1 bis 13, wobei man eine Anordnung von Lagen eines transparenten Substrates mittels Zwischenschichten aus transparentem Kunststoffmaterial ausführt, wobei wenigstens eine dieser Lagen mit einer transparenten, leitfähigen, dünnen Schicht versehen ist, die Flusstrennungslinien und Stromzuführungsmittel umfasst, **dadurch gekennzeichnet, dass** die Flusstrennungslinien durch Entfernen mittels YAG-Laser, wie etwa eines gepulsten Nd:YAG-Lasers, Wellenlänge 1064 nm, mit 20 W Pumpleistung und einer Spitzenleistung von 2,8 bis 110 kW, ausgeführt werden.

15. Verfahren nach Anspruch 14, **dadurch gekennzeichnet, dass** gleichzeitig mit den Flusstrennungslinien auch die Linie, welche den Rand der leitfähigen Schicht begrenzt, und im Fall einer Drehstromversorgung, die Phasentrennungslinien ausgeführt werden.

## Claims

1. Laminated heated glazing comprising at least two superposed transparent and mechanically strong substrate panes (A, B, C) with interposition, between two adjacent panes, of an interlayer (4; 6) made of a transparent plastic, said glazing furthermore including, in its thickness or on the surface, at least one thin transparent conductive film (11) that extends over at least part of the glazing, said film or films (11) being heated for the purpose of deicing and/or demisting by the Joule effect, with a heating area between two current leads (12) in the case of a single-phase current supply, or with three heating areas between their own current leads in the case of three-phase current supply, said current leads being placed on the boundary of the glazing and being connected to a current source external to the glazing, at least one thin film (11) having flow separation lines (13) formed by etching, in order to guide the current from one band to another, **characterized in that** the width of said flow separation lines (13) is comprised between 0.1 and 0.2 mm.

2. The heated glazing as claimed in claim 1, **characterized in that** the flow separation lines (13) are formed by etching the thin conductive film (11) over a depth that may go as far as the subadjacent film.

3. The heated glazing as claimed in one of claims 1 and 2, **characterized in that** the flow separation lines (13) are continuous lines or discontinuous lines, for example dotted lines.

4. The heated glazing as claimed in one of claims 1 to 3, **characterized in that** the thin film or at least one thin film (11) having flow separation lines (13) is a demisting film.

5. The heated glazing as claimed in one of claims 1 to 4, **characterized in that** the flow separation lines (13) are arranged along substantially parallel lines which are joined approximately at right angles to their respective two current lead bands (12) and which have bends or inflections when the two bands or parts of bands (12) facing each other make an angle between them.

6. The heated glazing as claimed in one of claims 1 to 5, in which the current supply is a three-phase supply, **characterized in that** the three heating areas are bounded by two phase separation lines (14) which are drawn approximately parallel to the flow separation lines (13) and are formed by etching, going down to the subjacent film and having a width of 1 to 2 mm, the current lead bands (12; 12₁, 12₂, 12₃) being arranged for star connection or delta connection.

7. The glazing as claimed in one of claims 1 to 4, **characterized in that** the thin conductive film (11) is a film of tin oxide or a film of tin-doped indium oxide or a film of fluorine-doped tin oxide, each of these films generally having a thickness of 50 to 500 nanometers, or a silver or gold film generally having a thickness of 50 to 200 nanometers.

8. The glazing as claimed in one of claims 1 to 7, **characterized in that** the thin conductive film (11) is bounded on its periphery by a line (15) which is closed on itself and also formed by etching, said line (15) enclosing the current lead band (12) and being formed over a depth going down to the subjacent film.

9. The glazing as claimed in one of claims 1 to 7, consisting of side or front window for an aircraft cockpit, **characterized in that** the laminated structure comprises at least two structural glass panes (panes B and C) which are intended to be fixed in a rebate of the vehicle and are bonded together via a first interlayer (4) made of transparent plastic, at least a third sheet (pane A), especially made of glass, which is not fixed to the rebate and is linked to the structural glass pane that is turned toward the outside (pane B) via a second interlayer (6) made of plastic, at least one thin conductive film (11) being placed within the thickness of the glazing.

10. The glazing as claimed in claim 9, **characterized in that** it includes a thin demisting film, the possible positions of the or each demisting film being:
- on pane B, as face turned toward the exterior of the glazing (face 3) or as face turned toward the interior of the glazing (face 4);
- on pane C, as face turned toward the outside of the glazing (face 5).

11. The glazing as claimed in either of claims 9 and 10, **characterized in that** it includes a thin deicing film on pane A, as face turned toward the interior of the glazing (face 2).

12. The glazing as claimed in one of claims 1 to 11, **characterized in that** said current lead bands with a thin conductive film are placed between the layers of the glazing, which comprise between them the thin conductive film.

13. The glazing as claimed in one of claims 1 to 12, **characterized in that** it includes at least one thin functional film other than the heating film, for example a solar protection film or an electrochromic film, several of these thin functional films possibly being in the form of a multilayer stack.

14. A process for the fabrication of glazing as defined in one of claims 1 to 13, whereby an assembly of transparent substrate panes are joined together by means of transparent plastic interlayers, at least one of these panes being provided with a thin transparent conductive film having flow separation lines and current lead means, **characterized in that** the flow separation lines are formed by ablation using a YAG laser, such as an Nd:YAG pulsed laser of 1064 nm wavelength, of 20 W pump power and peak power ranging from 2.8 to 110 kW.

15. The process as claimed in claim 14, **characterized in that** the line defining the periphery of the conductive film and, in the case of a three-phase supply, the phase separation lines are formed simultaneously with the flow separation lines.
